# EUROPEAN PATENT SPECIFICATION

(11) **EP 3 729 271 B1**
(45) Date of publication and mention of the grant of the patent: **28.06.2023**
(21) Application number: 18826039.2
(22) Date of filing: 20.12.2018
(51) Int. Cl.: H04L 67/125, H04L 67/00, H04L 69/40, G06F 11/07

(54) **DEVICES WITH NETWORKING FUNCTIONALITY**
VORRICHTUNGEN MIT VERNETZUNGSFUNKTIONALITÄT
DISPOSITIFS AVEC FONCTIONNALITÉ DE MISE EN RÉSEAU

(30) Priority: 20.12.2017 GB 201721480
(43) Date of publication of application: 28.10.2020
(73) Proprietor: Nordic Semiconductor ASA, 7052 Trondheim (NO)
(72) Inventor: VENÅS, Arne, 7052 Trondheim (NO); TALVITIE, Hannu, Oulu 90230 (FI)
(74) Representative: Dehns
(86) International application number: PCT/EP2018/086270
(87) International publication number: WO 2019/122172

(56) References cited:
- EP-A1- 2 642 390
- US-A1- 2007 276 939
- US-A1- 2011 202 797

## Description

The present invention relates to methods for restoring network functionality in networked devices, and devices configured to implement such methods, particularly but not exclusively in system-on-chip devices having wireless (e.g. radio) networking functionality.

A wide variety of electronic devices make use of a networking functionality to support an application running on the device. For example, a device having suitable sensor hardware (e.g. a smart watch with a thermometer, pedometer, heart rate monitor, etc.) may have an application for recording sensor data, and networking hardware and software for transmitting the sensor data to another device (e.g. a smartphone or tablet) for storage and analysis. In such devices, the networking functionality may not be the primary function of the device, but supports an application-specific functionality provided to the end-user of the device.

However, in such devices, to the extent that the application uses or relies on the networking functionality, any malfunction in the network domain (the hardware and/or software of the device that provide the networking functionality) will impede proper operation in the application domain (the hardware and/or software of the device that provide the application-specific functionality), disrupting the end-user's experience. If the application determines that the networking functionality is disrupted (i.e. when it unsuccessfully attempts to use the networking functionality), it can request a reset of the system to reset the network functionality. However, this also disrupts the running of the application and interferes with the user's experience of the device. Further, there may be a delay in restoring application functionality while the networking functionality is being restored. US 2011/202797 discloses a mobile communication device in which a communication subsystem (e.g. for wireless communication) can be selectively reset without performing a system-wide reset of the communication device. EP 2642390 discloses an electronic device with a plurality of subsystems. Processors configured to detect a fault in a subsystem and perform a reset of said subsystem. If the fault persists, the user is provided with an option to reset the system.

According to the invention there is provided a method of operating a device, the device having a networking subsystem, a power subsystem, and an application subsystem, the method comprising:
running an application on the application subsystem, wherein the application uses networking functionality provided by the networking subsystem;
the networking subsystem determining that a condition for triggering a reset of the networking subsystem has been met;
the networking subsystem sending a request to the power subsystem requesting a reset of the networking subsystem;
in response to the request, the power subsystem resetting the networking subsystem, thereby causing the networking subsystem to reinitialise; and
the application subsystem monitoring messages received from the networking subsystem to determine whether a threshold number of resets has been reached; and, in response to determining that the threshold has been reached, the application subsystem requesting a more extensive reset.

The invention extends to a device comprising a networking subsystem, a power subsystem, and an application subsystem wherein:
the device is configured to run an application on the application subsystem, wherein the application is configured to use networking functionality provided by the networking subsystem;
wherein the networking subsystem is configured to determine that a condition for triggering a reset of the networking subsystem has been met, and to send a request to the power subsystem requesting a reset of the networking subsystem; and
wherein the power subsystem is configured, in response to the request, to reset the networking subsystem so as to cause the networking subsystem to reinitialise.

Thus it can be seen that in accordance with the present invention, it is the networking subsystem that detects when there is a failure requiring a reset of the networking subsystem, and it is the networking subsystem that requests the reset from the power subsystem. This provides an advantage over prior art systems in which a failure of a networking subsystem is only identified by an application subsystem, (e.g. when an application fails to receive expected data or acknowledgement packets), and where it is the application subsystem which requests a reset of the networking subsystem. Without the benefit of the present invention, it would not be apparent that a reset of the networking subsystem is needed until the application tries unsuccessfully to make use of the networking functionality. A reset would therefore not be requested until the application has determined (e.g. after a threshold number of failed attempts has been reached) that the networking subsystem is malfunctioning. By this point, the networking failure will already have disrupted the user's experience, and further, it would be necessary for the user to wait until the reset has been completed for full application functionality to be restored.

In contrast, in accordance the present invention, as it is the networking subsystem that determines that a condition for triggering a reset has been met, the networking subsystem can request a reset directly from the power subsystem, rather than needing the application subsystem to request the reset. Consequently, the networking subsystem may be reset and networking functionality restored even before there is any apparent effect on an application's use of the networking functionality. Thus the present invention allows the impact on the application subsystem and therefore the impact on the user's experience to be reduced.

Preferably, the reset of the networking subsystem is carried out without input from the application subsystem and without disrupting operation of the application subsystem. The reset may therefore not be visible to a user of the device, allowing the user to continue using the application on the device without interruption even when a networking subsystem reset is required.

Preferably, the networking subsystem is selectively reset. In a set of embodiments the application subsystem, and optionally other subsystems that may be present on the device, is not reset and may continue operating while the networking subsystem reset is carried out. Thus the networking subsystem may be the only subsystem of the device that is reset in response to the request. This advantageously allows a malfunction or other situation requiring a reset to be handled without causing discontinuity in the user's experience of the application.

In a set of embodiments, the condition for triggering a reset that is determined to have been met is one of a plurality of predetermined conditions. Accordingly, the networking subsystem can monitor for known conditions that may prevent the networking subsystem functioning correctly. Without the benefit of the present invention, such conditions would result in a failure of network functionality in the application subsystem. The application subsystem would then need to identify the networking failure and to request a reset of the networking subsystem. The present invention advantageously allows the networking subsystem to detect these conditions and to request a reset without the application subsystem being required to determine the presence of a networking failure and to take steps to address this.

In a set of embodiments, the plurality of predetermined conditions for triggering a reset of the network domain comprises two or more conditions selected from the group consisting of: a watchdog counter timing out; detection of a security violation; detection of a processor malfunction or lockup; and reset being requested by a software program. In other embodiments, the plurality of predetermined conditions may include other conditions.

In a set of embodiments, each condition of the plurality of predetermined conditions is provided as an input to a logical OR function (e.g. a hardware OR gate) such that the logical OR function is satisfied when any one of the conditions is satisfied, and wherein the reset of the networking subsystem is triggered when the logical OR function is satisfied. In such embodiments, any one of the plurality of predetermined conditions may therefore result in the networking subsystem requesting a reset.

In preferred embodiments, device is configured so that one or both of the steps of: i) determining that a condition for triggering a reset of the networking subsystem has been met; and ii) sending a reset request, are carried out (e.g. substantially or entirely) by the hardware of the networking subsystem. This is advantageous because if the reason for the reset relates to a problem with the networking subsystem software such that the software cannot function, the software may be unable to perform these steps or carry out other functions. However, this is not always the case, and the software may be able, for example, to send messages, e.g. interprocessor messages.

In a set of embodiments, prior to the reset of the networking subsystem, the networking subsystem sends a message to the application subsystem to notify the application subsystem that the networking subsystem will be reset. This provides a further advantage, because although the reset of the networking subsystem in accordance with the invention may be carried out with minimal or no disruption to the application subsystem, the reset of the networking subsystem may nevertheless result in a brief period without network functionality. A message to the application subsystem notifying of the reset may allow the application subsystem to adapt to the brief period without network functionality during the reset so as to maintain a seamless user experience, e.g. by deferring any actions that require the network. The networking subsystem may send a message after the reset to notify the application subsystem that the reset and reinitialization of the networking subsystem has been completed. It will be appreciated that the networking subsystem should be fully functional after the reset, and therefore able to send a message irrespective of whether the networking subsystem software was functional before the reset. The application subsystem can then proceed to operate on the basis that networking functionality has been restored.

The application subsystem monitors messages received from the networking subsystem to determine whether a threshold number of resets has been reached, for example whether a threshold number of resets has been reached in a determined time duration. In response to determining that the threshold has been reached, the application subsystem requests a more extensive reset, e.g. it may request a reset of the whole device. The messages monitored by the application subsystem may be messages notifying of an upcoming or completed reset as mentioned in the preceding paragraph, or they may be other messages. Monitoring the messages to determine whether to request a more extensive reset is advantageous because, if a reset is repeatedly requested by the networking subsystem in a short time frame, it may indicate that the problem causing the resets to be triggered is not being resolved by resetting the networking subsystem and that a more extensive reset may therefore be required, e.g. a hard reboot of the device. The reset request sent by the application subsystem may be initiated automatically by the application subsystem itself, or it may be requested by a user providing input to the application subsystem to trigger the more extensive reset.

In some embodiments, the device may incorporate a register for recording reasons for reset requests. The device may be configured to store data indicative of a reason that a reset has been requested. The recorded reason may be retrieved after the reset has been completed and may, for example, be used to inform subsequent steps carried out by the networking subsystem, application subsystem and/or other device subsystem(s) after the reset. It may also be useful for debugging purposes.

In preferred embodiments, the device is a system-on-chip device. Such system-on-chip devices may advantageously be used in peripheral devices or accessories, e.g. portable devices, used in conjunction with a computing device such as a PC, smartphone or tablet. In such system-on-chip devices where the system-on-chip hosts a networking subsystem, the present invention can advantageously avoid the need for assistance from the host system to reset the networking subsystem.

In preferred embodiments, the device uses the networking subsystem to communicate over a wireless (e.g. radio) network connection. For example, the networking subsystem may comprise a wireless transmitter.

Certain preferred embodiments will now be described, by way of example only, with reference to the accompanying drawings in which:
Figure 1 shows a system-on-chip device in accordance with an embodiment of the present invention;
Figure 2 shows a networking subsystem in accordance with an embodiment of the present invention; and
Figure 3 shows a flowchart illustrating a method in accordance with the present invention.

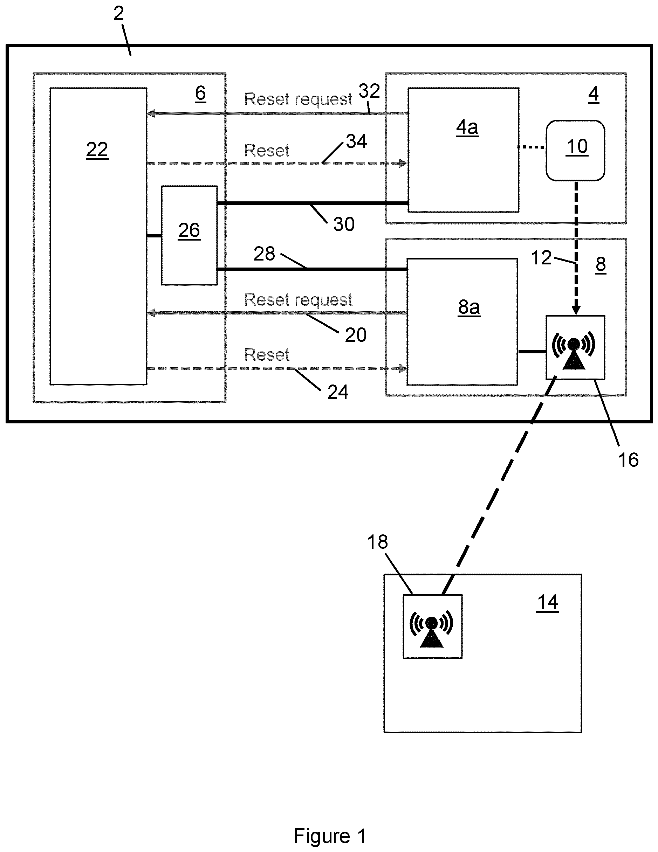

Figure 1 shows a system-on-chip device 2 in accordance with an embodiment of the invention. The system-on-chip device 2 comprises an application subsystem 4, a power subsystem 6 and a networking subsystem 8. The application subsystem 4 and the networking subsystem 8 each comprise respective central processing units (CPUs) 4a, 8a. The application subsystem CPU 4a runs a software application 10. The software application 10 may be, for example, an application for recording heart rate data in a sports accessory for use with a smart phone, in which case the system-on-chip device 2 may comprise a sensor subsystem for recording physical data for use by the application subsystem 4.

The software application 10 uses the network functionality of the network subsystem 8, as represented schematically by line 12, to communicate with a remote computing device 14. For example, recorded data or user input may be transmitted to the computing device 14 for storage and/or processing. The network subsystem 8 and the computing device 14 each comprise a respective wireless transceiver 16, 18 by which the networking subsystem 8 and the computing device 14 communicate with each other. This could, for example, be Bluetooth, Wifi, or a cellular network such as LTE.

During operation of the system-on-chip device 2, a situation may arise in which it is necessary or desirable to reset the networking subsystem 8, e.g. to avoid a network failure or reduced network performance. The networking subsystem 8 detects when such a situation has arisen by determining that a condition triggering a reset of the networking subsystem 8 has been met. For example, the networking subsystem may detect a watchdog timeout, or a security violation, or one of various other possible conditions.

In response to determining that such a condition has been met, the networking subsystem 8 sends a reset request 20 to the power subsystem 6. The power subsystem 6 contains system reset generation logic 22, which receives the reset request. In response to the reset request, the system resets generation logic 22 resets the networking subsystem 8 as shown schematically by the arrow 24. For example, the system reset generation logic 22 may discontinue power being supplied to the networking subsystem 8 from a power source 26 in the power subsystem 6. The power source 26 independently supplies the networking subsystem 8 and the application subsystem 4 via respective separate connections 28, 30. It may also supply other subsystems via further respective power connections. Power to the networking subsystem 8 can therefore be discontinued without disrupting the supply of power to the application subsystem 4 and other subsystems. However, the reset may be accomplished by other mechanisms without necessarily discontinuing power. For example, power may continue to be supplied to the networking subsystem during the reset. The system reset generation logic 22 then reinitialises the networking subsystem 8, e.g. by restoring the power supply to the networking subsystem 8. When the networking subsystem 8 reinitialises, networking functionality should be restored.

If the application subsystem needs to be reset for any reason, this is accomplished separately. The application subsystem 4 can send a reset request 32 to the system reset and generation logic 22. The system reset and generation logic 22 can then reset the application subsystem, as shown schematically by the arrow 34. The reset may be selective, i.e. resetting only the application subsystem. However, other subsystems may be reset as well, e.g. including the network domain. For example, the whole device may be reset. The reset may be accomplished by discontinuing and restoring power supply to the application subsystem via connection 30 (and optionally to other subsystems, e.g. via the networking subsystem power connection 28). However, the reset may be accomplished by any suitable mechanism, and the reset need not necessarily be accomplished by discontinuing and restoring power. Power may continue to be supplied to each subsystem during the reset.

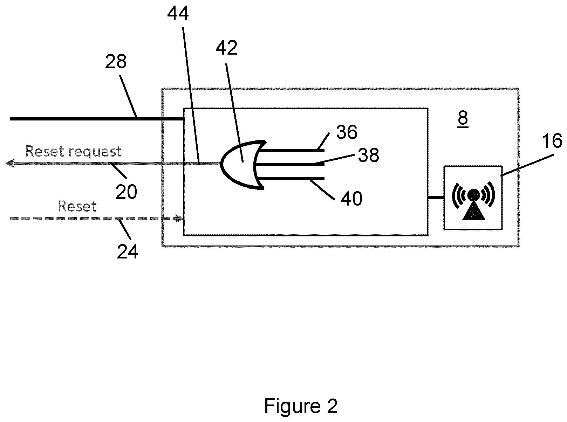

Figure 2 shows how a networking subsystem in accordance with an embodiment of the invention is configured to request a reset in response to determining that one of a plurality of conditions for triggering a reset has been met. For example, the networking subsystem 8 of Figure 1 may be configured as shown in Figure 2.

A plurality of inputs 36, 38, 40 is provided to a logical OR gate 42. Each input 36, 38, 40 corresponds to a possible condition for triggering a reset of the networking subsystem 8. For example, input 36 may correspond to a watchdog timeout; input 38 may correspond to a security violation; and input 40 may correspond to a central processing unit (CPU) malfunction. It will be appreciated that the inputs may correspond to other conditions for triggering a reset, and that more or fewer than three inputs is also possible.

If the condition corresponding to an input 36, 38, 40 has not been met, the corresponding input 36, 38, 40 is in a binary 0 state. If the condition corresponding to an input 36, 38, 40 has been met, the corresponding input 36, 38, 40 is changed to a binary 1 state. Thus the output 44 of the logical OR gate 42 is low if none of the conditions for triggering a reset is met, and is high if one or more of the conditions for triggering a reset is met. If the output is high, then the networking subsystem 8 sends a reset request 20 to the power subsystem 6, and the networking subsystem 8 is reset, as represented schematically by arrow 24. If the output 44 is low, no reset request is sent. Thus the use of the logical OR gate results in a reset being requested if any one of a plurality of conditions is met.

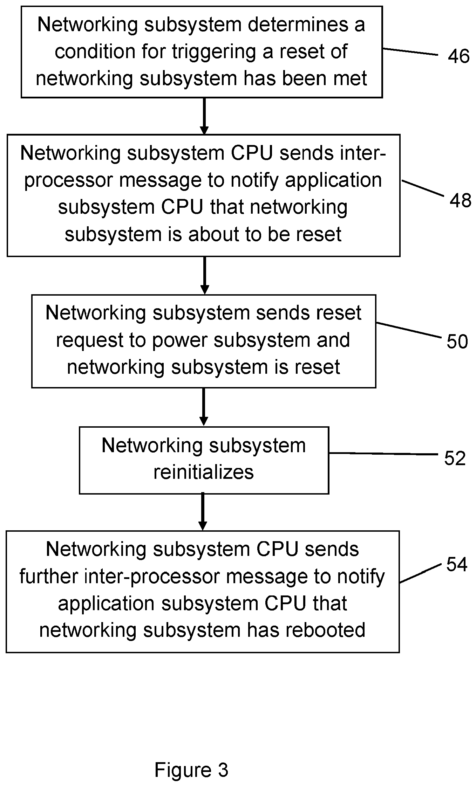

Figure 3 shows a flow chart illustrating an embodiment of a method in accordance with the present invention. For example, the method of Figure 3 may be used by the devices described above with reference to Figures 1 and 2.

At step 46, the networking subsystem 8 determines that a condition for triggering a reset of the networking subsystem 8 has been met. As noted above, this may be one of a plurality of possible conditions.

Before requesting a reset, at step 48, the networking subsystem CPU 8a transmits an inter-processor communication to the application subsystem CPU 4a notifying it that the networking subsystem 8 is about to be reset. The application subsystem 4 is then able to adjust its operation to compensate for the temporary disruption in networking functionality.

Then, at step 50, the networking subsystem 8 sends a reset request to the power subsystem 6, and the networking subsystem is reset. At step 52, the networking subsystem 8 reinitializes (i.e. it reboots).

Once the networking subsystem 8 is fully rebooted and networking functionality is restored, at step 54, the networking subsystem CPU 8a sends a further message to the application subsystem CPU 4a notifying it that the networking subsystem 8 has rebooted. The application subsystem 4 can then resume operating normally, making use of the networking functionality.

It will be appreciated that the above embodiments are examples only, and that other embodiments and variations are possible within the scope of the claims.

## Claims

1. A method of operating a device (2), the device (2) having a networking subsystem (8), a power subsystem (6), and an application subsystem (4), the method comprising:
running an application (10) on the application subsystem (4), wherein the application uses networking functionality (12) provided by the networking subsystem (8);
the networking subsystem (8) determining that a condition for triggering a reset of the networking subsystem (8) has been met;
the networking subsystem (8) sending a request (20) to the power subsystem (6) requesting a reset of the networking subsystem (8);
in response to the request, the power subsystem (6) resetting the networking subsystem (8), thereby causing the networking subsystem (8) to reinitialise; and
the application subsystem (4) monitoring messages received from the networking subsystem (8) to determine whether a threshold number of resets has been reached; and, in response to determining that the threshold has been reached, the application subsystem (4) requesting a more extensive reset.

2. The method as claimed in claim 1, wherein the reset of the networking subsystem (8) is carried out without input from the application subsystem (4) and without disrupting operation of the application subsystem (4).

3. The method as claimed in claim 1 or 2, wherein at least one of the steps of:
determining that a condition for triggering a reset of the networking subsystem (8) has been met; and sending a request to the power subsystem (6) requesting a reset of the networking subsystem (8), is carried out by hardware of the networking subsystem (8).

4. The method as claimed in any preceding claim, wherein the condition for triggering a reset that is determined to have been met is one of a plurality of predetermined conditions, optionally wherein the plurality of predetermined conditions for triggering a reset of the network domain comprises two or more conditions selected from the group consisting of:
a watchdog counter timing out (36);
detection of a security violation (38);
detection of a processor malfunction or lockup (40); and
a software program being reset, and/or wherein each condition of the plurality of predetermined conditions is provided as an input to a logical OR function (42) such that the logical OR function (42) is satisfied when any one of the conditions is satisfied, and wherein the reset of the networking subsystem (8) is triggered when the logical OR function (42) is satisfied.

5. The method as claimed in any preceding claim, wherein prior to the reset of the network subsystem (8), the networking subsystem (8) sends a message to the application subsystem (4) to notify the application subsystem that the networking subsystem (8) will be reset and/or wherein the networking subsystem (8) sends a message after the reset to notify the application subsystem (4) that the reset of the networking subsystem (8) has been completed.

6. The method as claimed in any preceding claim, wherein the device is a system-on-chip device.

7. The method as claimed in any preceding claim, wherein the device uses the networking subsystem (8) to communicate over a wireless network connection.

8. A device (2) comprising a networking subsystem (8), a power subsystem (6), and an application subsystem wherein:
the device (2) is configured to run an application (10) on the application subsystem (4), wherein the application is configured to use networking functionality (12) provided by the networking subsystem (8);
wherein the networking subsystem (8) is configured to determine that a condition for triggering a reset of the networking subsystem (8) has been met, and to send a request (20) to the power subsystem (6) requesting a reset of the networking subsystem (8);
wherein the power subsystem (6) is configured, in response to the request, to reset the networking subsystem (8) so as to cause the networking subsystem to reinitialise; and
wherein the application subsystem (4) is configured to:
monitor messages received from the networking subsystem (8) to determine whether a threshold number of resets has been reached;
and, in response to determining that the threshold has been reached, to request a more extensive reset.

9. The device (2) as claimed in claim 8, wherein the power subsystem (6) is configured to carry out the reset the networking subsystem (8) without input from the application subsystem (4) and without disrupting operation of the application subsystem (4).

10. The device (2) as claimed in claim 8 or 9, wherein the device (2) is configured so that at least one of the steps of: determining that a condition for triggering a reset of the networking subsystem (8) has been met; and sending a request to the power subsystem (6) requesting a reset of the networking subsystem (8), is carried out by hardware of the networking subsystem (8).

11. The device (2) as claimed in any of claims 8 to 10, wherein the condition for triggering a reset is one of a plurality of predetermined conditions for triggering a reset of the networking subsystem (8), optionally wherein the plurality of predetermined conditions for triggering a reset of the network domain comprises two or more conditions selected from the group consisting of:
a watchdog counter (36) timing out;
detection of a security violation (38);
detection of a processor malfunction or lockup (40); and
a software program being reset, and/or wherein each condition of the plurality of predetermined conditions is provided as an input to a logical OR function (42) such that the logical OR function (42) is satisfied when any one of the conditions is satisfied, and wherein the reset of the networking subsystem (8) is triggered when the logical OR function (42) is satisfied.

12. The device (2) as claimed in any of claims 8 to 11, wherein the networking subsystem (8) is configured to send a message to the application subsystem (4) prior to the reset of the network subsystem (8) to notify the application subsystem (4) that the networking subsystem (8) will be reset and/or wherein the networking subsystem (8) is configured to send a message after the reset to notify the application subsystem that the reset of the networking subsystem (8) has been completed.

13. The device as claimed in any of claims 8 to 12, wherein the device is a system-on-chip device.

14. The device as claimed in any of claims 8 to 13, wherein the device is configured to use the networking subsystem (8) to communicate over a wireless network connection.

## Patentansprüche

1. Verfahren zum Betreiben einer Vorrichtung (2), wobei die Vorrichtung (2) ein Netzwerksubsystem (8), ein Stromsubsystem (6) und ein Anwendungssubsystem (4) aufweist, wobei das Verfahren Folgendes umfasst:
Abspielen einer Anwendung (10) auf dem Anwendungssubsystem (4), wobei die Anwendung Netzwerkfunktionalität (12) verwendet, die von dem Netzwerksubsystem (8) bereitgestellt wird;
Bestimmen, durch das Netzwerksubsystem (8), dass eine Bedingung zum Auslösen eines Resets des Netzwerksubsystems (8) erfüllt wird;
Senden, durch das Netzwerksubsystem (8), einer Anforderung (20) an das Stromsubsystem (6), das ein Reset des Netzwerksubsystems (8) anfordert;
in Reaktion auf die Anforderung, Zurücksetzen, durch das Stromsubsystem (6), des Netzwerksubsystems (8), wodurch das Netzwerksubsystem (8) veranlasst wird, sich zu reinitialisieren; und
Überwachen, durch das Anwendungssubsystem (4), von Nachrichten, die von dem Netzwerksubsystem (8) empfangen werden, um zu bestimmen, ob eine Schwellenanzahl von Resets erreicht wurde; und, in Reaktion auf Bestimmen, dass die Schwelle erreicht wurde, Anfordern, durch das Anwendungssubsystem (4), eines umfassenderen Resets.

2. Verfahren nach Anspruch 1, wobei das Reset des Netzwerksubsystems (8) ohne Eingabe von dem Anwendungssubsystem (4) und ohne Unterbrechung der Operation des Anwendungssubsystems (4) durchgeführt wird.

3. Verfahren nach Anspruch 1 oder 2, wobei zumindest einer der Schritte: Bestimmen, dass eine Bedingung zum Auslösen eines Resets des Netzwerksubsystems (8) erfüllt wurde; und Senden einer Anforderung an das Stromsubsystem (6), die ein Reset des Netzwerksubsystems (8) anfordert, von Hardware des Netzwerksubsystems (8) durchgeführt wird.

4. Verfahren nach einem vorstehenden Anspruch, wobei die Bedingung zum Auslösen eines Resets, die bestimmt wurde erfüllt zu sein, eine einer Vielzahl vorgegebener Bedingungen ist, wobei optional die Vielzahl von vorgegebenen Bedingungen zum Auslösen eines Resets der Netzwerkdomäne zwei oder mehr Bedingungen umfasst, die aus der Gruppe ausgewählt sind, die aus Folgendem besteht:
Unterbrechung eines Funktionswächterzählers (36);
Detektion einer Sicherheitsverletzung (38);
Detektion einer Prozessorfehlfunktion oder eines Einfrierens (40); und
Zurücksetzen eines Softwareprogramms und/oder wobei jede Bedingung der Vielzahl von vorgegebenen Bedingungen als eine Eingabe zu einer logischen ODER-Funktion (42) bereitgestellt wird, so dass die logische ODER-Funktion (42) erfüllt wird, wenn irgendeine der Bedingungen erfüllt wird, und wobei das Reset des Netzwerksubsystems (8) ausgelöst wird, wenn die logische ODER-Funktion (42) erfüllt wird.

5. Verfahren nach einem vorstehenden Anspruch, wobei vor dem Reset des Netzwerksubsystems (8) das Netzwerksubsystem (8) eine Nachricht an das Anwendungssubsystem (4) sendet, um das Anwendungssystem zu benachrichtigen, dass das Netzwerksubsystem (8) zurückgesetzt wird, und/oder wobei das Netzwerksubsystem (8) nach dem Reset eine Nachricht sendet, um das Anwendungssubsystem (4) zu benachrichtigen, dass das Reset des Netzwerksubsystems (8) abgeschlossen wurde.

6. Verfahren nach einem vorstehenden Anspruch, wobei die Vorrichtung eine System-auf-einem-Chip-Vorrichtung ist.

7. Verfahren nach einem vorstehenden Anspruch, wobei die Vorrichtung das Netzwerksubsystem (8) verwendet, um über eine drahtlose Netzwerkverbindung zu kommunizieren.

8. Vorrichtung (2), die ein Netzwerksubsystem (8), ein Stromsubsystem (6) und ein Anwendungssubsystem umfasst, wobei:
die Vorrichtung (2) konfiguriert ist, eine Anwendung (10) auf dem Anwendungssubsystem (4) laufen zu lassen, wobei die Anwendung konfiguriert ist, Netzwerkfunktionalität (12) zu verwenden, die von dem Netzwerksubsystem (8) bereitgestellt wird;
wobei das Netzwerksubsystem (8) konfiguriert ist, zu bestimmen, dass eine Bedingung zum Auslösen eines Resets des Netzwerksubsystems (8) erfüllt wurde, und eine Anforderung (20) an das Stromsubsystem (6) zu senden, die ein Reset des Netzwerksubsystems (8) anfordert;
wobei das Stromsubsystem (6) konfiguriert ist, in Reaktion auf die Anforderung das Netzwerksubsystem (8) zurückzusetzen, um das Netzwerksubsystem zu veranlassen, sich zu reinitialisieren; und
wobei das Anwendungssubsystem (4) für Folgendes konfiguriert ist:
Überwachen von Nachrichten, die von dem Netzwerksubsystem (8) empfangen werden, um zu bestimmen, ob eine Schwellenanzahl von Resets erreicht wurde;
und in Reaktion auf Bestimmen, dass die Schwelle erreicht wurde, Anfordern eines umfassenderen Resets.

9. Vorrichtung (2) nach Anspruch 8, wobei das Stromsubsystem (6) konfiguriert ist, das Reset des Netzwerksubsystems (8) ohne Eingabe von dem Anwendungssubsystem (4) und ohne Unterbrechung der Operation des Anwendungssubsystems (4) durchzuführen.

10. Vorrichtung (2) nach Anspruch 8 oder 9, wobei die Vorrichtung (2) derart konfiguriert ist, dass zumindest einer der Schritte: Bestimmen, dass eine Bedingung zum Auslösen eines Resets des Netzwerksystems (8) erfüllt wurde; und Senden einer Anforderung an das Stromsubsystem (6), die ein Reset des Netzwerksubsystems (8) anfordert, von Hardware des Netzwerksubsystems (8) durchgeführt wird.

11. Vorrichtung (2) nach einem der Ansprüche 8 bis 10, wobei die Bedingung zum Auslösen eines Resets eine einer Vielzahl vorgegebener Bedingungen zum Auslösen eines Resets des Netzwerksubsystems (8) ist, wobei optional die Vielzahl von vorgegebenen Bedingungen zum Auslösen eines Resets der Netzwerkdomäne zwei oder mehr Bedingungen umfasst, die aus der Gruppe ausgewählt sind, die aus Folgendem besteht:
Unterbrechung eines Funktionswächterzählers (36);
Detektion einer Sicherheitsverletzung (38);
Detektion einer Prozessorfehlfunktion oder eines Einfrierens (40); und
Zurücksetzen eines Softwareprogramms; und/oder wobei jede Bedingung der Vielzahl von vorgegebenen Bedingungen als eine Eingabe zu einer logischen ODER-Funktion (42) bereitgestellt wird, so dass die logische ODER-Funktion (42) erfüllt wird, wenn irgendeine der Bedingungen erfüllt wird, und wobei das Reset des Netzwerksubsystems (8) ausgelöst wird, wenn die logische ODER-Funktion (42) erfüllt wird.

12. Vorrichtung (2) nach einem der Ansprüche 8 bis 11, wobei das Netzwerksubsystem (8) konfiguriert ist, vor dem Reset des Netzwerksubsystems (8) eine Nachricht an das Anwendungssubsystem (4) zu senden, um das Anwendungssubsystem (4) zu benachrichtigen, dass das Netzwerksubsystem (8) zurückgesetzt wird, und/oder wobei das Netzwerksubsystem (8) konfiguriert ist, nach dem Reset eine Nachricht zu senden, um das Anwendungssubsystem zu benachrichtigen, dass das Reset des Netzwerksubsystems (8) abgeschlossen wurde.

13. Vorrichtung nach einem der Ansprüche 8 bis 12, wobei die Vorrichtung eine System-auf-einem-Chip-Vorrichtung ist.

14. Vorrichtung nach einem der Ansprüche 8 bis 13, wobei die Vorrichtung konfiguriert ist, das Netzwerksystem (8) zu verwenden, um über eine drahtlose Netzwerkverbindung zu kommunizieren.

## Revendications

1. Procédé d'exploitation d'un dispositif (2), le dispositif (2) présentant un sous-système de mise en réseau (8), un sous-système d'alimentation (6), et un sous-système d'application (4), le procédé comprenant :
l'exécution d'une application (10) sur le sous-système d'application (4), dans lequel l'application utilise une fonctionnalité de mise en réseau (12) fournie par le sous-système de mise en réseau (8) ;
le sous-système de mise en réseau (8) déterminant qu'une condition pour déclencher une réinitialisation du sous-système de mise en réseau (8) a été remplie ;
le sous-système de mise en réseau (8) envoyant une demande (20) au sous-système d'alimentation (6) demandant une réinitialisation du sous-système de mise en réseau (8) ;
en réponse à la demande, le sous-système d'alimentation (6) réinitialisant le sous-système de mise en réseau (8), amenant ainsi le sous-système de mise en réseau (8) à se réinitialiser ; et
le sous-système d'application (4) surveillant les messages reçus à partir du sous-système de mise en réseau (8) pour déterminer si un nombre seuil de réinitialisations a été atteint ; et, en réponse à la détermination que le seuil a été atteint, le sous-système d'application (4) demandant une réinitialisation plus importante.

2. Procédé selon la revendication 1, dans lequel la réinitialisation du sous-système de mise en réseau (8) est réalisée sans entrée provenant du sous-système d'application (4) et sans perturbation de l'opération du sous-système d'application (4).

3. Procédé selon la revendication 1 ou 2, dans lequel au moins l'une des étapes de :
détermination qu'une condition pour déclencher une réinitialisation du sous-système de mise en réseau (8) a été remplie ; et envoi d'une demande au sous-système d'alimentation (6) demandant une réinitialisation du sous-système de mise en réseau (8), est réalisée par le matériel du sous-système de mise en réseau (8).

4. Procédé selon une quelconque revendication précédente, dans lequel la condition pour déclencher une réinitialisation qui est déterminée comme ayant été remplie est l'une d'une pluralité de conditions prédéterminées, optionnellement dans lequel la pluralité de conditions déterminées pour déclencher une réinitialisation du domaine de réseau comprend deux conditions ou plus choisies dans le groupe constitué de :
une expiration de compteur de surveillance (36) ;
la détection d'une violation (38) de la sécurité ;
la détection d'un dysfonctionnement ou d'un verrouillage (40) de processeur ; et
un programme logiciel étant réinitialisé, et/ou dans lequel chaque condition de la pluralité de conditions prédéterminées est fournie en tant qu'entrée à une fonction OU logique (42) de telle manière que la fonction OU logique (42) est satisfaite lorsque l'une quelconque des conditions est satisfaite, et dans lequel la réinitialisation du sous-système de mise en réseau (8) est déclenchée lorsque la fonction OU logique (42) est satisfaite.

5. Procédé selon une quelconque revendication précédente, dans lequel avant la réinitialisation du sous-système de réseau (8), le sous-système de mise en réseau (8) envoie un message au sous-système d'application (4) pour notifier le sous-système d'application que le sous-système de mise en réseau (8) sera réinitialisé et/ou dans lequel le sous-système de mise en réseau (8) envoie un message après la réinitialisation pour notifier le sous-système d'application (4) que la réinitialisation du sous-système de mise en réseau (8) a été achevée.

6. Procédé selon une quelconque revendication précédente, dans lequel le dispositif est un dispositif de système sur puce.

7. Procédé selon une quelconque revendication précédente, dans lequel le dispositif utilise le sous-système de mise en réseau (8) pour communiquer sur une connexion de réseau sans fil.

8. Dispositif (2) comprenant un sous-système de mise en réseau (8), un sous-système d'alimentation (6), et un sous-système d'application dans lequel :
le dispositif (2) est configuré pour exécuter une application (10) sur le sous-système d'application (4), dans lequel l'application est configurée pour utiliser une fonctionnalité de mise en réseau (12) fournie par le sous-système de mise en réseau (8) ;
dans lequel le sous-système de mise en réseau (8) est configuré pour déterminer qu'une condition pour déclencher une réinitialisation du sous-système de mise en réseau (8) a été remplie, et pour envoyer une demande (20) au sous-système d'alimentation (6) demandant une réinitialisation du sous-système de mise en réseau (8) ;
dans lequel le sous-système d'alimentation (6) est configuré, en réponse à la demande, pour réinitialiser le sous-système de mise en réseau (8) de façon à amener le sous-système de mise en réseau à se réinitialiser ; et
dans lequel le sous-système d'application (4) est configuré pour :
surveiller les messages reçus à partir du sous-système de mise en réseau (8) pour déterminer si un nombre seuil de réinitialisations a été atteint ;
et, en réponse à la détermination que le seuil a été atteint, demander une réinitialisation plus importante.

9. Dispositif (2) selon la revendication 8, dans lequel le sous-système d'alimentation (6) est configuré pour réaliser la réinitialisation du sous-système de mise en réseau (8) sans entrée provenant du sous-système d'application (4) et sans perturbation de l'opération du sous-système d'application (4).

10. Dispositif (2) selon la revendication 8 ou 9, dans lequel le dispositif (2) est configuré de sorte qu'au moins l'une des étapes de : détermination qu'une condition pour déclencher une réinitialisation du sous-système de mise en réseau (8) a été remplie ; et envoi d'une demande au sous-système d'alimentation (6) demandant une réinitialisation du sous-système de mise en réseau (8), est réalisée par le matériel du sous-système de mise en réseau (8).

11. Dispositif (2) selon l'une quelconque des revendications 8 à 10, dans lequel la condition pour déclencher une réinitialisation est l'une d'une pluralité de conditions prédéterminées pour déclencher une réinitialisation du sous-système de mise en réseau (8), optionnellement dans lequel la pluralité de conditions déterminées pour déclencher une réinitialisation du domaine de réseau comprend deux conditions ou plus choisies dans le groupe constitué de :
une expiration de compteur de surveillance (36) ;
la détection d'une violation (38) de la sécurité ;
la détection d'un dysfonctionnement ou d'un verrouillage (40) de processeur ; et
un programme logiciel étant réinitialisé, et/ou dans lequel chaque condition de la pluralité de conditions prédéterminées est fournie en tant qu'entrée à une fonction OU logique (42) de telle manière que la fonction OU logique (42) est satisfaite lorsque l'une quelconque des conditions est satisfaite, et dans lequel la réinitialisation du sous-système de mise en réseau (8) est déclenchée lorsque la fonction OU logique (42) est satisfaite.

12. Dispositif (2) selon l'une quelconque des revendications 8 à 11, dans lequel le sous-système de mise en réseau (8) est configuré pour envoyer un message au sous-système d'application (4) avant la réinitialisation du sous-système de réseau (8) pour notifier le sous-système d'application (4) que le sous-système de mise en réseau (8) va être réinitialisé et/ou dans lequel le sous-système de mise en réseau (8) est configuré pour envoyer un message après la réinitialisation pour notifier le sous-système d'application que la réinitialisation du sous-système de mise en réseau (8) a été achevée.

13. Dispositif selon l'une quelconque des revendications 8 à 12, dans lequel le dispositif est un dispositif de système sur puce.

14. Dispositif selon l'une quelconque des revendications 8 à 13, dans lequel le dispositif est configuré pour utiliser le sous-système de mise en réseau (8) pour communiquer sur une connexion de réseau sans fil.
